(19)

Europäisches
Patentamt
European
Patent Office
Office européen
des brevets

(11) **EP 4 524 683 A1**

(12) **EUROPEAN PATENT APPLICATION**

(43) Date of publication:
**19.03.2025 Bulletin 2025/12**

(21) Application number: **24198999.5**

(22) Date of filing: **06.09.2024**

(51) International Patent Classification (IPC):
*G06F 1/3203* (2019.01)    *G06F 1/3206* (2019.01)
*G06F 1/3209* (2019.01)    *G06F 1/3228* (2019.01)
*G06F 1/324* (2019.01)    *G06F 1/3234* (2019.01)
*G06F 9/48* (2006.01)    *G06F 9/50* (2006.01)
*G06N 20/00* (2019.01)    *H04L 12/10* (2006.01)
*H04L 12/40* (2006.01)    *H04L 41/00* (2022.01)
*H04L 43/00* (2022.01)

(52) Cooperative Patent Classification (CPC):
**G06F 1/324; G06F 1/3203; G06F 1/3206;
G06F 1/3209; G06F 1/3228; G06F 1/3243;
G06F 9/4893; G06F 9/5094; G06N 20/00;
H04L 12/00; H04L 12/10; H04L 12/40039;
H04L 12/40045; H04L 41/00; H04L 43/00;** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.09.2023  IN 202341060929
28.06.2024  US 202418759333**

(71) Applicant: **Juniper Networks, Inc.
Sunnyvale, CA 94089 (US)**

(72) Inventors:
• **KOMMULA, Raja
  Sunnyvale, 94089 (US)**
• **SUNKADA, Ganesh Byagoti Matad
  Sunnyvale, 94089 (US)**
• **SRIDHAR, Thayumanavan
  Sunnyvale, 94089 (US)**
• **YAVATKAR, Raj
  Sunnyvale, 94089 (US)**

(74) Representative: **D Young & Co LLP
3 Noble Street
London EC2V 7BQ (GB)**

(54) **APPLICATION AND TRAFFIC AWARE  MACHINE LEARNING-BASED POWER MANAGER**

(57)    Example systems and techniques are disclosed for power management. An example system includes one or more memories and one or more processors. The one or more processors are configured to obtain workload metrics from a plurality of nodes of a cluster. The one or more processors are configured to obtain network function metrics from the plurality of nodes of the cluster. The one or more processors are configured to execute at least one machine learning model to predict a corresponding measure of criticality of traffic of each node. The one or more processors are configured to determine, based on the corresponding measure of criticality of traffic of each node, a corresponding power mode for at least one processing core of each node. The one or more processors are configured to recommend or apply the corresponding power mode to the at least one processing core of each node.

FIG. 9

**(Cont. next page)**

(52) Cooperative Patent Classification (CPC): (Cont.)
    **H04W 52/00**

## Description

This application claims the benefit of US Patent Application No. 18/759,333, filed 28 June 2024, which claims the benefit of India patent application 202341060929, filed 11 September 2023, which is incorporated by reference herein in its entirety.

## TECHNICAL FIELD

This disclosure relates to computer networks and, more specifically, to computer networks having at least a portion of energy requirements met by renewable energy sources.

## BACKGROUND

In a typical cloud data center environment, there is a large collection of interconnected servers that provide computing and/or storage capacity to run various applications. For example, a data center may comprise a facility that hosts applications and services for subscribers, e.g., customers of the data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power a large number of homes (e.g., around 80,000). Data centers may also run application workloads that are compute and data intensive, such as crypto mining and machine learning applications, that consume a significant amount of energy. As energy use has risen, customers of data centers and data center providers themselves have become more concerned about meeting energy requirements through the use of renewable (e.g., green) energy sources, as opposed to non-renewable, carbon emitting, fossil fuel-based (e.g., non-green) energy sources. As such, some service level agreements (SLAs) associated with data center services include green energy goals or requirements or limitations on the use of non-green energy sources.

## SUMMARY

In general, techniques are described for power management to address concerns regarding the use of non-green energy sources. In a cluster, every compute node may run a network function. Such network functions may include switching, routing, or security functions (e.g., firewall functions). Such network functions may use direct polling of network interfaces to determine when a packet is available for application of the network function. Direct polling is achieved by allocating a dedicated number of processor (e.g., CPU) cores to the polling action. Direct polling provides high performance, but requires the dedicated processor cores to run at full capacity (e.g., 100% busy) irrespective of traffic load. For example, the dedicated processors cores continue to operate even when there are no packets on the network interfaces for application of the network function. A direct poll when there is no available packet may be referred to as an empty poll. Empty polls waste processor cycles and therefore, waste power.

As such, it may be desirable to have an adaptive power optimizer to reduce processor cycles depending on traffic behavior and traffic criticality. For example, a power optimizer may predict when packets are expected to arrive and may adjust a processor core frequency, pause or resume a processor core, adjust a processor core's internal power saver state, or the like, such that usage is reduced when packets are not expected. Reduction of power usage by processor cores may improve a data center, cluster, or service's ability to meet power related SLA requirements.

In one example, this disclosure describes a computing system including one or more memories and one or more processors communicatively coupled to the one or more memories, the one or more processors being configured to: obtain workload metrics from a plurality of nodes of a cluster; obtain network function metrics from the plurality of nodes of the cluster; and for each node of the plurality of nodes: execute at least one machine learning model to predict a measure of criticality of traffic of the node; determine, based on the measure of criticality of traffic of the node, a power mode for at least one processing core of the node; and recommend or apply the power mode to the at least one processing core of the node.

In another example, this disclosure describes a method including: obtaining, by one or more processors, workload metrics from a plurality of nodes of a cluster; obtaining, by the one or more processors, network function metrics from the plurality of nodes of the cluster; and for each node of the plurality of nodes: executing, by the one or more processors, at least one machine learning model to predict a measure of criticality of traffic of the node; determining, by the one or more processors and based on the measure of criticality of traffic of the node, a power mode for at least one processing core of the node; and recommending or applying, by the one or more processors, the power mode to the at least one processing core of the node.

In another example, this disclosure describes computer-readable media storing instructions which, when executed, cause one or more processors to: obtain workload metrics from a plurality of nodes of a cluster; obtain network function metrics from the plurality of nodes of the cluster; and for each node of the plurality of nodes: execute at least one machine learning model to predict a measure of criticality of traffic of the node; determine, based on the measure of criticality of traffic of the node, a power mode for at least one processing core of the node; and recommend or apply the power mode to the at least one processing core of the node.

The details of one or more examples of this disclosure are set forth in the accompanying drawings and the description below. Other features, objects, and advantages will be apparent from the description and drawings, and from the claims.

## BRIEF DESCRIPTION OF DRAWINGS

FIG. 1 is a block diagram illustrating an example network system having a data center in which examples of the techniques described herein may be implemented.
FIG. 2 is a block diagram illustrating an example computing device according to techniques described herein.
FIG. 3 is a block diagram illustrating an example node according to one or more aspects of this disclosure.
FIG. 4 is a block diagram illustrating an example power manager according to one or more aspects of this disclosure.
FIG. 5 is a block diagram illustrating a 3 node cluster according to one or more aspects of this disclosure.
FIG. 6 is a block diagram illustrating a cluster power manager and a 3 node cluster according to one or more aspects of this disclosure.
FIG. 7 is a block diagram illustrating example workloads according to one or more aspects of this disclosure.
FIG. 8 is a flow diagram illustrating example power manager techniques according to one or more aspects of this disclosure.
FIG. 9 is a flow diagram illustrating further example power manager techniques according to one or more aspects of this disclosure.

Like reference characters denote like elements throughout the description and figures.

## DETAILED DESCRIPTION

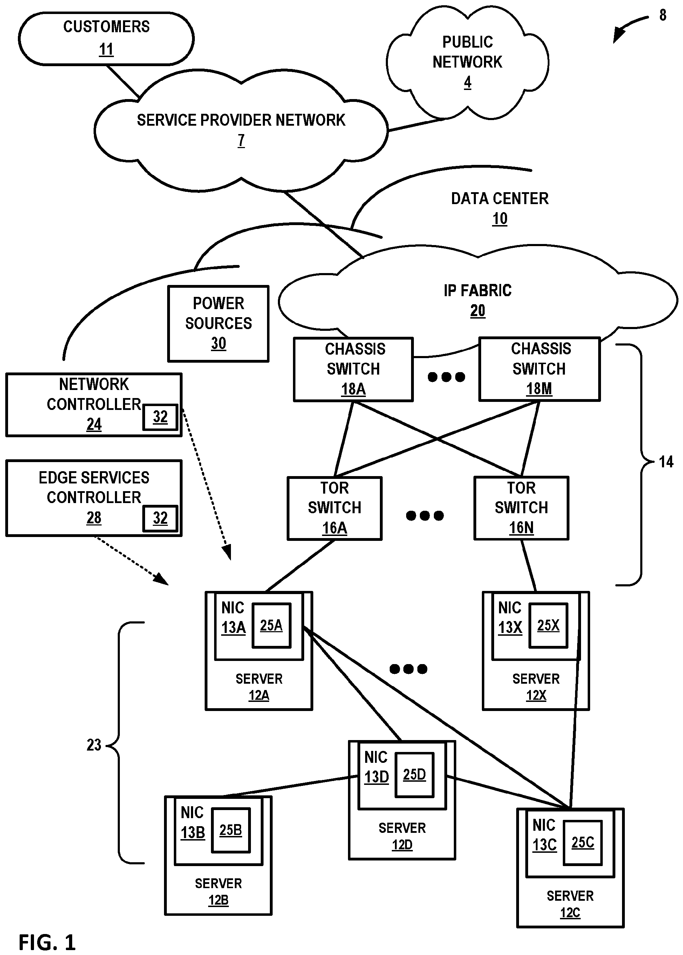

FIG. 1 is a block diagram illustrating an example system 8 having computing infrastructure in which examples of the application and traffic aware machine learning-based power management techniques described herein may be implemented. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for a Network Function Virtualization (NFV) architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

In some examples, servers 12 each may include at least one network interface card (NIC) of NICs 13A-13X (collectively, "NICs 13"), which each include at least one port with which to exchange packets send and receive packets over a communication link. For example, server 12A includes NIC 13A. NICs 13 provide connectivity between the server and the switch fabric. In some examples, NIC 13 includes an additional processing unit in the NIC itself to offload at least some of the processing from the host CPU (e.g., the CPU of the server that includes the NIC) to the NIC, such as for performing policing and other advanced functionality, known as the "datapath."

In some examples, each of NICs 13 provides one or more virtual hardware components for virtualized input/output (I/O). A virtual hardware component for I/O may be a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

In some examples, NICs 13 each include a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

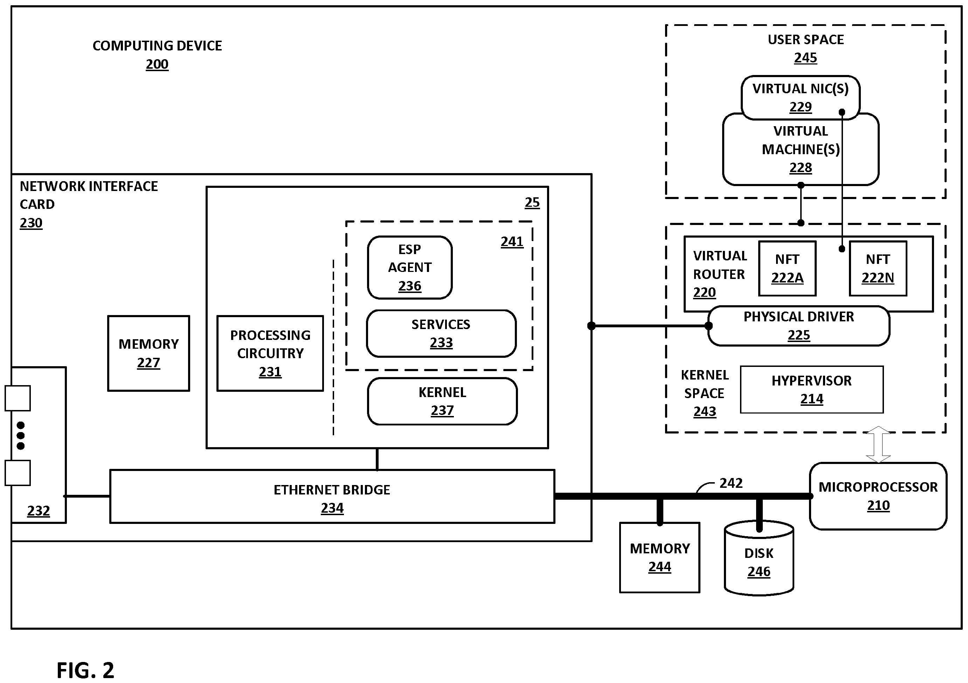

Edge services controller 28 may manage the operations of the edge services platform within NIC 13s in part by orchestrating services (e.g., services 233 as shown in FIG. 2) to be performed by processing units 25; application programming interface (API) driven deployment of services 233 on NICs 13; NIC 13 addition, deletion and replacement within the edge services platform; monitoring of services 233 and other resources on NICs 13; and management of connectivity between various services 233 running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent Application No. 14/226,509, filed March 26, 2014, and entitled "Tunneled Packet Aggregation for Virtual Networks," each of which is incorporated by reference as if fully set forth herein.

In some examples, network controller 24 or edge services controller 28 may determine the energy efficiency and/or usage of data center 10 and/or the energy efficiency and/or usage of data center 10 when deploying an application workload, and may invoke one or more actions to improve energy efficiency (e.g., save energy) of data center 10. In some examples, network controller 24 or edge services controller 28 determines the energy efficiency and/or usage of data center 10 for workloads running on servers 12 and/or NICs 13. In some examples, network controller 24, edge services controller 28, and/or other device(s) of FIG. 1 may determine the type of energy usage, such as an amount of green energy usage and an amount of non-green energy usage associated with data center 10, a given service, a given workload, a given node, a given cluster of nodes, or the like.

In some examples, network controller 24 or edge services controller 28 may implement an application and traffic aware machine learning-based power manager according to the techniques of this disclosure. As further described below, power manager 32 may obtain workload metrics and network function metrics from a plurality of nodes of the cluster. Power manager 32 may execute at least one machine learning model to predict a corresponding measure of criticality of traffic of each node of the plurality of nodes. Power manager 32 may determine, based on the corresponding measure of criticality of traffic of each node, a corresponding power mode for at least one processing core of each node. Power manager 32 may recommend or apply the corresponding power mode to the at least one processing core of each node. For example, any of servers 12 or NICs 13 may implement a node in the cluster.

For example, network controller 24 may obtain workload metrics from a plurality of nodes of a cluster, such as server 12A and NIC 13D which may execute workloads of a cluster. Network controller 24 may obtain network function metrics from the plurality of nodes of the cluster. For each node of the plurality of nodes (e.g., for server 12A and for NIC 13D), network controller 24 may execute at least one machine learning model to predict a measure of criticality of traffic of the node. For example, network controller 24 may predict a measure of criticality for traffic of server 12A and predict a measure of criticality for traffic of NIC 13D. Network controller 24 may determine, based on the measure of criticality of traffic of the node, a power mode for at least one processing core of the node. For example, network controller may determine a first power mode for at least one processing core of server 12A and determine a second power mode for at least one processing core of NIC 13D. Network controller 24 may recommend or apply the power mode to the at least one processing core of the node. For example, network controller 24 may recommend or apply the first power mode to the at least one processing core of server 12A and recommend or apply the second power mode to the at least one processing core of NIC 13D.

FIG. 2 is a block diagram illustrating an example computing device according to techniques described herein. Computing device 200 of FIG. 2 may represent network controller 24, edge services controller 28, or may represent an example instance of any of servers 12 of FIG. 1. Computing device 200 includes in this example, a bus 242 coupling hardware components of a computing device 200 hardware environment. Bus 242 couples SR-IOV-capable network interface card (NIC) 230, storage disk 246, and microprocessor 210. A frontside bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Memory device 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Memory device 244 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory device 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as containers (e.g., a DOCKER container) may implement virtual network endpoints. An operating system kernel (not shown in FIG. 2) may execute in kernel space 243 and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228 of user space 245. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use the physical function provided by network interface card 230. In some cases, network interface card 230 may also implement SR-IOV to enable sharing the physical network function (I/O) among the virtual machines. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of the virtual machines as a dedicated NIC. Virtual functions may represent lightweight PCIe functions that share physical resources with the physical function and with other virtual functions. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory device 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge 234 which may include an embedded switch 234. Ethernet bridge 234 may perform layer 2 forwarding between virtual functions and physical functions of NIC 230. Ethernet bridge 234 thus in some cases provides hardware acceleration, via bus 242, of inter-virtual machine packet forwarding and of packet forwarding between hypervisor 214, which accesses the physical function via physical driver 225, and any of the virtual machines. Ethernet bridge 234 may be physically separate from processing unit 25.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses a physical function for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

An edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel may be a Linux kernel, a Unix or BSD kernel, a real-time operating system (OS) kernel, or other kernel for managing hardware resources of processing unit 25 and managing user space 241.

Services 233 may include network, security, storage, data processing, co-processing, machine learning or other services, such as energy efficiency services, in accordance with techniques described in this disclosure. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network, computing device 200 or network resource availability, resource availability of resources of processing unit 25 (such as memory or core utilization), and/or resource energy usage. As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuring services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231. In some examples, edge services controller 28 may invoke one or more actions to improve energy usage of data center 10 via managing the operations of processing unit 25. In some examples, edge services controller 28 may set a target green quotient for processing unit 25 that causes processing unit 25 to select or adjust a particular routing or tunnel protocol, particular algorithm, maximum transmission unit (MTU) size, interface, and/or any of services 233.

In some examples, virtual machine(s) 228 may execute a number of different workloads, for example, workloads of a plurality of services. Power manager 32 may obtain telemetry data, including workload metrics and network function metrics, of computing device 200 to determine power mode(s) which power manager 32 may recommend or apply to one or more processing cores of processing circuitry 231.

An application and traffic aware machine learning based power manager is now described. As discussed above, direct polling of network interfaces provides high performance for a network function, but requires the dedicated processor cores to run at full capacity (e.g., 100% busy) irrespective of traffic load. Existing solutions that attempt to address the possible waste of power by such dedicated processor cores attempt to provide optimization based on an empty poll count. However, such solutions introduce latency and may result in dropped packets. Such solutions may not have an awareness of the cluster network itself and may lack awareness about service criticality and hence, traffic criticality at every compute node. Knowledge of service criticality may be important, as a same power reduction policy may not be optimal for every node at any time. For example, the criticality of a traffic passing (e.g., switching, routing, security, etc.) network function varies based on the services running (or scheduled to run) on the compute node.

According to the techniques of this disclosure, a power manager may selectively apply power optimizations to network functions running at every compute node. Such power optimizations may include lowering processor core frequencies, pausing processor cores, moving processor cores to internal inactive states, etc. Reduction of power usage by processor cores may improve a data center, cluster, or service's ability to meet power related SLA requirements or meet service provider power related goals.

Cloud native network functions like routers and/or firewalls provide high performance and advanced routing functionalities in a cluster fabric. Currently, it is common to use DPDK (Data Plane Development Kit) for a data plane to achieve high network performance using continuous direct polling of Ethernet devices bypassing a kernel network stack. The direct polling of network devices by DPDK based user space applications may be performed using Poll Mode Drivers (PMDs). For example, a dedicated number of processor cores may be assigned to poll the network devices. The processor cores assigned to listen for incoming packets may poll the network packet receiving queues at 100% processor utilization. Due to this polling nature, DPDK-based network functions consume constant power irrespective of incoming traffic rate they are receiving. From a sustainability perspective, in highly scaled scenarios, this kind of redundant power consumption may lead to a high carbon footprint when data centers are powered by nonrenewable (non-green) energy sources and may lead to a failure in achieving sustainability goals of service providers or SLA requirements. In cases of data centers powered using limited available green or renewable energy sources, the cloud native network functions may not be able to meet scaling SLA requirements. So, it may be desirable to have an adaptive power manager that may be configured to save redundant power usage by DPDK-based cloud native network functions, thereby helping service providers to accomplish their sustainability goals without compromising the network traffic SLA requirements.

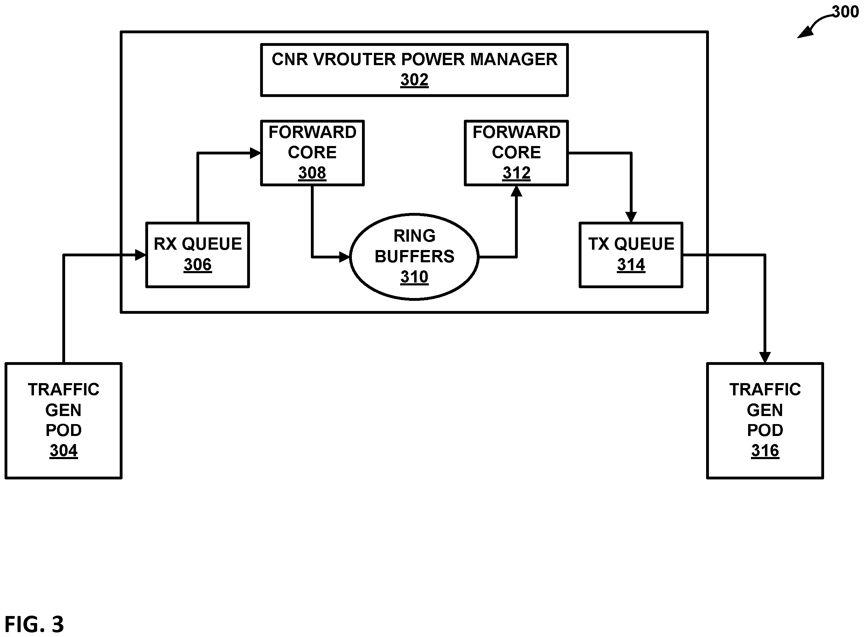

FIG. 3 is a block diagram illustrating an example node according to one or more aspects of this disclosure. Node 300, which may be a Kubernetes node, is shown. Node 300 includes two pods, traffic generation pod 304 and traffic generation pod 316. A receive queue 306 of node 300 may receive traffic generated by a workload or pod, such as traffic generation pod 304. Forward core 308 may obtain the traffic from receive queue 306 and forward the traffic to ring buffers 310. Forward core 312 may obtain the traffic from ring buffers 310 and forward the traffic bound for another workload, such as traffic generation pod 316, to transmit queue 314. Transmit queue 314 may forward the traffic to traffic generation pod 316.

A power manager, such as cloud native router (CNR) virtual router (vrouter) power manager 302 may manage power used by node 300. In some examples, CNR vrouter power manager 302 may implement the techniques of this disclosure, such as managing power in an application and traffic aware manner, and may be an example of power manager 32.

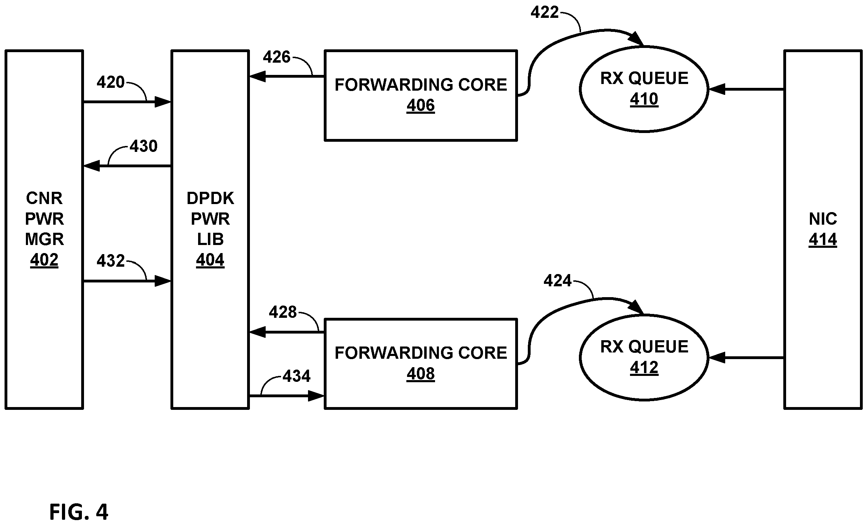

FIG. 4 is a block diagram illustrating an example power manager according to one or more aspects of this disclosure. CNR power manager 402, which may be an example of CNR vrouter power manager 302, may implement the power management techniques of this disclosure. CNR power manager 402 may register for poll mode driver (PMD) poll statistics 420 with DPDK power library 404.

Forwarding core 406 may poll 422 receive queue 410 for packets. Similarly, forwarding core 408 may poll 424 receive queue 412 for packets. Receive queues 410 and 412 may be receive queues coupled to or part of NIC 414. For example, traffic received by NIC 414 may be sent to receive queue 410 and/or receive queue 412.

For example, in the example that receive queue 410 has traffic for forwarding, forwarding core 406 may send a poll status callback 426 to DPDK power library 404, which may indicate N packets are to be forwarded. In the example that receive queue 412 does not have traffic for forwarding, forwarding core 408 may send a poll status callback 428 which may indicate that 0 packers are to be forwarded. In other words, there is an empty poll.

DPDK power library 404 may send poll statistics 430 to CNR power manager 402. In some examples, poll statistics 430 may indicate that there are N packets on receive queue 410 and 0 packets on receive queue 412. CNR power manager 402 may send a power command 432. Power command 432 may be indicative of an instruction to set a power savings scheme for forwarding core 408. For example, such a power savings scheme may include pausing forwarding core 408 or lowering a frequency of forwarding core 408. DPDK power library 404 may implement the power savings scheme 434 such as pausing forwarding core for a time "T".

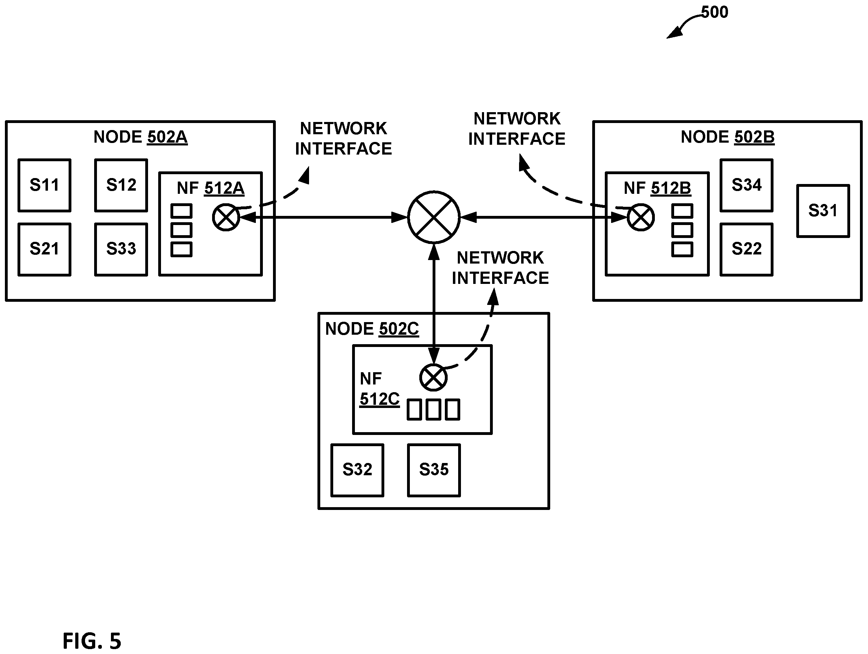

FIG. 5 is a block diagram illustrating a 3 node cluster according to one or more aspects of this disclosure. While shown as a 3 node cluster, a cluster may have fewer or more nodes than 3-node cluster 500. 3 node cluster 500 may include nodes 502A-502C. Node 502A may include network function (NF) 512A which may include or be supported by a number of processing cores. Such processing cores are represented by the rectangles shown within NF 512A. Node 502A may run a number of workloads as depicted by service 1 workload 1 (S11), service 1 workload 2 (S12), service 2 workload 1 (S21), and service 3 workload 3 (S33). Node 502B may include NF 512B which may include or be supported by a number of processing cores. Node 502B may run workloads including service 2 workload 2 (S22), service 3 workload 1 (S31), and service 3 workload 4 (S34). Node 502C may include NF 512C which may include or be supported by a number of processing cores. Node 502C may run workloads including service 3 workload 2 (S32) and service 3 workload 5 (S35). Workloads of a service may sometimes be referred to as replicas. The workloads shown as being implemented on nodes 502A-502C are shown as examples and different numbers or types of workloads may be implemented than those shown.

Each of NF 512A-NF 512C may include a network interface for interfacing with a power controller or manager (not shown in FIG. 5).

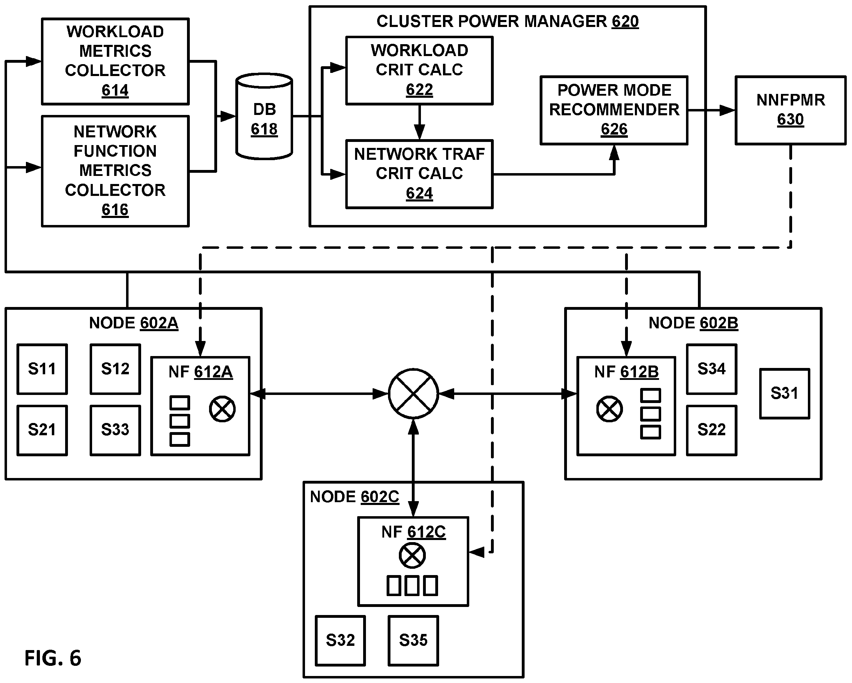

FIG. 6 is a block diagram illustrating a cluster power manager and a 3 node cluster according to one or more aspects of this disclosure. Nodes 602A-602C may represent examples of nodes 502A-502C of FIG. 5. NFs 612A-612C may represent examples of NFs 512A-512C of FIG. 5.

Workload metrics collector 614 may collect metrics from each of nodes 602A-602C regarding workloads operating on such nodes. For example, workload metrics collector 614 may collect metrics regarding which workloads are operating at which times. For example, workload metrics collector 614 may collect metrics indicating that S11, S12, S21, and S33 are operating on node 602A. Workload metrics collector 614 may collect similar metrics from nodes 602B and 602C regarding workloads operating on nodes 602B and 602C.

Network function metrics collector 616 may collect metrics regarding NFs 612A-612C. For example, network function metrics collector 616 may collect traffic metrics (e.g., speed, latency, etc.), poll statistics of poll mode drivers (not shown), and/or the like. Workload metrics collector 614 and network function metrics collector 616 may store collected metrics in database 618.

Cluster power manager 620 may include workload criticality calculator 622, network traffic criticality calculator 624, and power mode recommender 626. Workload criticality calculator 622 may determine criticality of the workloads operating on nodes 602A-602C (e.g., S11, S12, S21, S22, and S31-S35). Network traffic criticality calculator 624 may determine the criticality of traffic of a node of the 3 node cluster. Representative examples of how workload criticality calculator 622 may determine criticality of the workloads and how network traffic criticality calculator 624 may determine the criticality of traffic are set forth below.

Power mode recommender 626 may recommend power savings measures which may be implemented in the 3 node cluster based on the workload criticality determined by workload criticality calculator 622 and the network traffic criticality calculator 624. Node network function power mode resource 630 may poll for power mode information from NFs 612A-612C and may selectively apply power savings measures to any of the processors of NFs 612A-612C.

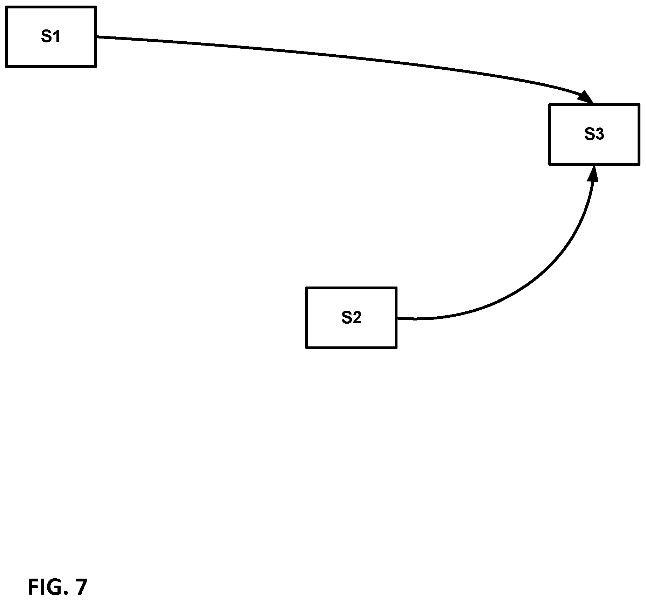

FIG. 7 is a block diagram illustrating example workloads according to one or more aspects of this disclosure. In the example of FIG. 7, S1, S2, and S3 are workloads running within a cluster of one or more compute nodes. In this example, S1 depends on S3. For example, S1 makes API calls to S3. In this example, S2 also depends on S3. For example, S2 makes API calls to S3. For example, S3 may be a database service for S1 and S2 and may therefore be more critical than S1 or S2.

Referring back to FIG. 6, for example, S11 and S12 may be workloads of a non-critical service. S21 and S22 may be workloads of a medium critical service. S31-S35 may be workloads of a high critical service. Traffic flowing between node 602B and node 602C may be high critical traffic.

In some examples, power saving actions may be taken, based on the predicted traffic and service workload criticality levels, for a certain duration. The criticality levels may help in determining the CPU frequency and CPU C-states to apply to save power. A CPU C-state is a core power state that defines a degree to which a processor may be idle or functions of the processor may be put to sleep. The criticality of traffic and service workloads may be predicted for a user configured duration, via machine learning techniques, using traffic and service workload telemetry data. For example, a machine learning pipeline may predict criticality of traffic of cluster node-1 as 3 on a scale of 1 to 10 for the next duration window of 1 hour.

For example, network traffic criticality calculator 624 may analyze the collected metrics in database 618 and predict the service workload and traffic criticality for each of a plurality of workloads. Network traffic criticality calculator 624 may learn that a service workload, for example, workload S3 will be more critical under one or more certain conditions, such as when the service workload has a higher number of standby replicas in the next duration 't' to maintain high availability and/or is invoked by high number of other services in next duration 't.'

Workload criticality may be determined as:

$$\text{Workload Criticality(t)} = \text{Linear\_Function(WAF, WDF)}$$

Where: WAF is a workload availability factor for the next t time (e.g., hours, days, minutes, etc.) and WDF is a workload dependency factor for the next t time (e.g., hours, days, minutes, etc.).

For example, for each workload in the cluster (e.g., workloads S11, S12, S21, S22, and S31-S35, cluster power manager 620 may determine a workload dependency factor (WDF) and a workload availability factor (WAF). In some examples, cluster power manager 620 may determine the WDF for a workload as WDF = Number of workloads depending on the workload / Total number of workloads in the cluster. In some examples, cluster power manager 620 may determine the WAF for a workload as WAF = Number of workloads depending on the workload / Average number of workloads depending on any workload.

In some examples, the WAF and WDF are based on predictions for a next time period t, rather than current dependency and availability. For example, workload criticality calculator 622 may execute one or more machine learning models to predict a number of workloads depending on the workload, a total number of workloads in the cluster, a number of workloads depending on the workload, and/or an average number of workloads depending on any workload. In such examples, workload criticality calculator 622 may determine WAF as WAF = predicted number of workloads depending on the workload / predicted total number of workloads in the cluster. In such examples, workload criticality calculator 622 may determine WDF as WDF = predicted number of workloads depending on the workload / predicted average number of workloads depending on any workload.

When a workload is critical, generally a standby copy or replica is kept to meet 99.99% availability. Not all workloads will have standby replicas.

|  | S1 | S2 | S3 |
|---|---|---|---|
| WDF | 0/9 = 0 | 0/9 = 0 | 2/9 = 0.23 |
| WAF | 0/2 = 0 | 1/2 = 0.5 | 2/5 = 0.4 |

Workload criticality calculator 622 may calculate the criticality of each workload. For example, workload criticality calculator 622 may determine workload criticality (WC) of a particular workload as WC = dWC + B1 * WDF + B2 * WAF where: dWC is a default workload criticality, B1 is a dependency factor coefficient, and B2 is an availability factor coefficient (constant, usually configured value).

B1 and B2 may be constants and may be user configurable. In some examples, B1 and B2 are configured to a value between 0 and 1, inclusive.

For example, if B1 is configured as 0.5 and B2 is configured as 0.2, this means that: a 2 unit increase in WDF will increment the workload's criticality by 1 unit and a 5 unit increase in WAF will increment the workload's criticality by 1 unit.

Network traffic criticality calculator 624 may learn that traffic passing through a router instance will be more critical for the configured duration of t time, such as when an average criticality of service workloads participating in the traffic is high, an average traffic speed is high, an average traffic latency is low, and/or when an average empty poll count is low.

Node traffic criticality may be determined as:

$$\text{Node Traffic Criticality}(t) = \text{linear\_function}(Cw, Ts, Tl, Ec)$$

Where: $Cw$ is an average workload criticality for next duration $t$, $Ts$ is a predicted traffic speed/bandwidth requirement for next duration $t$, $Tl$ is a predicted traffic latency requirement for next duration $t$, and $Ec$ is an average empty poll count.

Network traffic criticality calculator 624 may determine the traffic criticality of a node. The traffic criticality of the network function of a node may be determined primarily, by factoring the criticality of all workloads running on the node. For example, network traffic criticality calculator 624 may employ an aggregation like average to find the workload criticality of all workloads running on a particular node. For example, in every geographic zone, there may be a node which will have stand-by replicas scheduled to provide better availability for a workload.

When more critical workloads are scheduled to run on a particular node, the network function of that node typically carries more critical data. In such a case, any power optimization techniques applied to processors of that network function should be milder than may be applied to processors of network functions handling less critical traffic.

Network traffic criticality calculator 624 may also consider forecasted bandwidth and latency of the traffic passing through the particular network function. For example, network traffic criticality calculator 624 may determine node traffic criticality (NTC) as NTC = Default TC + avg(Workload Criticality scheduled onto the Node) * B 1 + Predicted Traffic Bandwidth * B2 - Predicted Traffic Latency * B3 Where Default TC is a default traffic criticality value and B 1-B3 are coefficient constants that may be user configurable.

As discussed above, network function metrics collector 616 may collect traffic bandwidth and latency metrics of each of NFs 612A-612C in a time series manner. Network traffic criticality calculator may include one more machine learning models which may be configured to predict or forecast traffic bandwidth and/or traffic latency. The forecasted traffic bandwidth and the forecasted traffic latency may be used to determine the node traffic criticality. In some examples, the one or more machine learning models may be trained using historical traffic bandwidth and/or traffic latency data.

Network traffic criticality calculator 624 may send the predicted criticality values to a power mode recommender 626. Power mode recommender 626 may determine any processor optimization techniques to recommend be used for any given processor of NFs 612A-612C. Such power optimization techniques may have different optimization levels. For example, one power optimization technique may be to lower the processor core frequency range. With this technique, the lower the frequency is made, the lower the power consumption by the processor core. Another power optimization technique is to pause a processor core. A processor core may be paused for a specific duration. The higher the pause duration is, the lower the power consumption by the processor core. Another power optimization technique is to utilize processor core idle or sleep states, such as states C0 - Cn. In general, the higher the state number in which the processor core is place, the lower the power consumption by the processor core.

In some examples, power mode recommender 626 may look up, e.g., in memory, a user configured map or table of traffic criticality to power optimization levels. For example, a user may configure a traffic criticality to optimization level mapping. In some examples, the mapping may depend on a processor type and/or vendor support. In other words, in some examples, different power optimization techniques (or levels) may be used for different processor types, even if the different processor types have a same associated traffic criticality. In some examples, power mode recommender 626 may analyze the node configurations of nodes 602A-602C and capabilities of the cluster and determine the power saving actions to be taken. For example, based on the criticality values of traffic and service workloads, power mode recommender 626 may suggest a change to a processor core frequency, a processor pause duration, and/or a change in a processor power savings state, such as a "C-state" for any one or more of the processors of NFs 612A-612C.

For example, for a network function having higher TC(Traffic Criticality), power mode recommender 626 may recommend a relatively higher frequency, a relatively lower pause duration, and/or a relatively lower order CPU core inactivity state. For the network function having lower TC(Traffic Criticality), power mode recommender 626 may a relatively lower frequency, a relatively higher pause duration, and/or a relatively higher order CPU core inactivity state.

Power mode recommender 626 may recommend an optimization level for a network function and node network function power mode resource (NNFPMR) 630 may update the network function's power optimization level to implement the recommendation.

In some examples, during low activity durations, workloads may be scaled down and/or availability replicas may be reduced. In low activity durations, cluster power manager 620 may perform a periodic calculation of workload criticality and traffic criticality to ensure that processor cores of low critical network functions start saving processor cycles and therefore, power. The periodic calculation of workload criticality and traffic criticality, and the updating of power optimization techniques, may be automatic and may not require any administrative work or static policy.

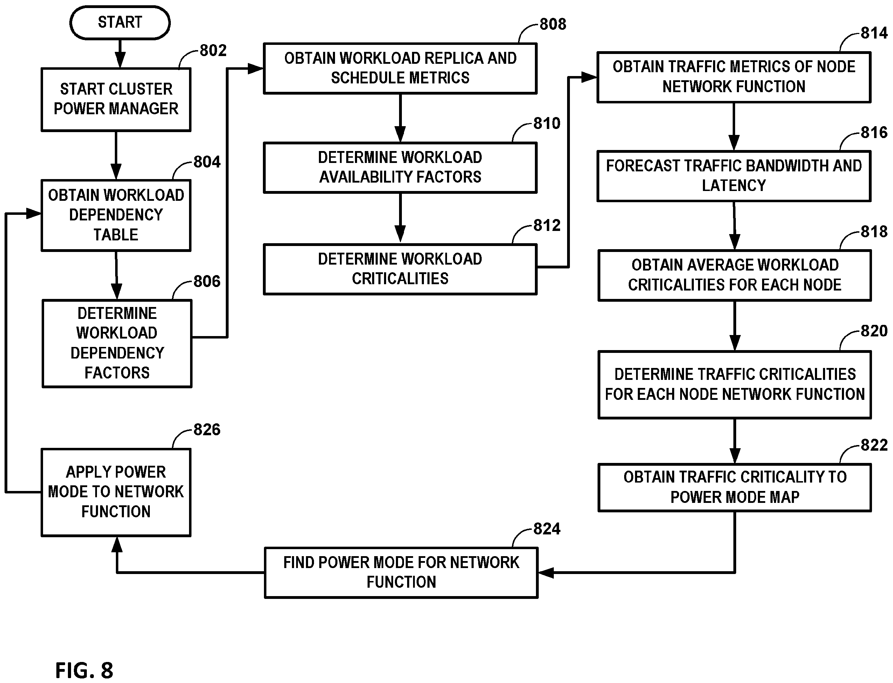

FIG. 8 is a flow diagram illustrating example power manager techniques according to one or more aspects of this disclosure. While the example of FIG. 8 is discussed with respect to network controller 24, the techniques of FIG. 8 may be implemented by network controller 24, edge services controller 28, and/or any other device capable of performing such techniques.

Network controller 24 may start cluster power manager (802). For example, network controller 24 may start cluster power manager 620. Network controller 24 may obtain a workload dependency table (804). For example, an administrator may enter a workload dependency table which may be indicative of any dependencies any workload may have.

Network controller 24 may determine workload dependency factors (806). For example, network controller 24 may determine workload dependency factors based on the workload dependency table. Network controller 24 may obtain workload replica and schedule metrics (808). For example, network controller 24 may obtain workload replica and schedule metrics from database 618, such as a number of workload replicas that exist at what times, when replicas are created, when replicas are destroyed, and/or the like. In some examples, an administrator may enter such information.

Network controller 24 may determine workload availability factors (810). Network controller 24 may determine workload criticalities (812).

Network controller 24 may obtain traffic metrics of node network functions (814). For example, network controller 24 may obtain traffic metrics from database 618, such as traffic speed, throughput, latency, and/or the like. In some examples, an administrator may enter such information.

Network controller 24 may forecast traffic bandwidth and latency (816). For example, network controller 24 may execute a machine learning model to forecast traffic bandwidth and latency. Network controller 24 may obtain average workload criticalities for each node (818).

Network controller 24 may determine traffic criticalities for each node network functions (820). Network controller 24 may obtain traffic criticality to power mode map (822). For example, network controller 24 may load a user generated traffic criticality to power optimization map from memory (e.g., database 618).

Network controller 24 may find a power mode for a network function (824). For example, network controller 24 may determine a power mode based on the traffic criticality via looking up the traffic criticality in the traffic criticality to power mode map. Network controller 24 may apply the power mode to the network function (826). For example, network controller 24 may implement the power mode in one or more processor cores of a network function.

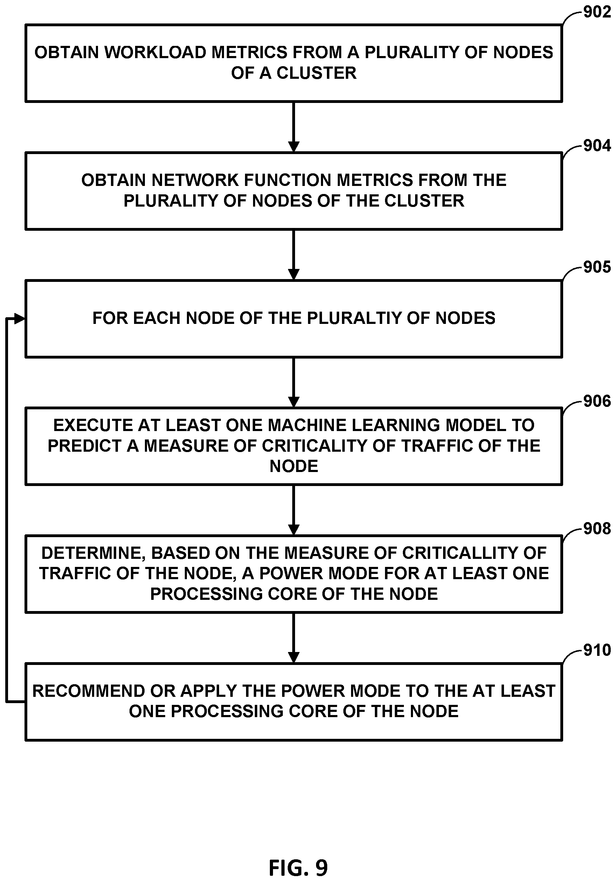

FIG. 9 is a flow diagram illustrating further example power manager techniques according to one or more aspects of this disclosure. While the example of FIG. 9 is discussed with respect to network controller 24, the techniques of FIG. 9 may be implemented by network controller 24, edge services controller 28, and/or any other device capable of performing such techniques.

Network controller 24 may obtain workload metrics from a plurality of nodes of a cluster (902). For example, network controller 24 may obtain workload metrics from nodes 602A-602C. Workload metrics may include at least one of a workload dependency count (e.g., how many workloads depend on a given workload) or a workload service availability configuration (e.g., how many stand-by replicas for a workload are on a node, how many replicas for a workload are on a node, etc.).

Network controller 24 may obtain network function metrics from the plurality of nodes of the cluster (904). For example, network controller 24 may obtain network function metrics from nodes 602A-602C. Network function metrics may include traffic speed of the node, traffic bandwidth of the node, traffic latency of the node, or poll statistics of the node.

For each node of the plurality of nodes (905) (network controller may complete the following steps for every node of the cluster), network controller 24 may execute at least one machine learning model to predict a measure of criticality of traffic of the node (906). For example, network controller 24 may execute a machine learning model trained to predict criticality of traffic of the node to predict the measure of criticality of the traffic of the node.

For each node of the plurality of nodes, network controller 24 may determine, based on the measure of criticality of traffic of the node, a power mode for at least one processing core of the node (908). For example, network controller 24 may determine a power mode, based on the measure of criticality of traffic of the node, to be applied to at least one processing core of the node.

Network controller 24 may recommend or apply the power mode to the at least one processing core of the node (910). For example, network controller 24 may recommend the power mode to another device or a user to determine whether to apply the power mode or to apply the power mode to the at least one processing core. In another example, network controller 24 may apply the power mode to the at least one processing core.

In some examples, network controller 24 may automatically and periodically perform the techniques of this disclosure. For example, network controller 24 may automatically, on a periodic basis, and for each node of the plurality of nodes: execute the at least one machine learning model to predict an updated measure of criticality of traffic of the node; determine, based on the updated measure of criticality of traffic of the node, an updated power mode for the at least one processing core of the node; and recommend or apply the updated power mode to the at least one processing core of the node.

In some examples, applying the power mode includes at least one of pausing operation of the at least one processor core, changing a frequency of the at least one processor core, or moving the at least one processor core into a different processor power state. In some examples, the power mode is limited to a predetermined amount of time. For example, the frequency of a processor core is changed for a time t, a processor core is paused for a time t, or a processor core is moved into a different processor power state for a time t. In some examples, after the time t, operation of the processor core may revert to a state prior to the application of the power mode.

In some examples, the measure of criticality of traffic of the node is based on at least one of a determined workload criticality of one or more workloads of the node, a predicted bandwidth of the node, or a predicted traffic latency of the node. In some examples, the determined workload criticality is based at least in part on a workload availability factor and a workload dependency factor. In some examples, network controller 24 may determine the workload criticality. In some examples, network controller 24 may determine the workload availability factor and the workload dependency factor by executing the at least one machine learning model. In some examples, network controller 24 may determine the workload availability factor and the workload dependency factor based on the workload metrics. For example, rather than determining the workload availability factor and the workload dependency factor based on predicted workload metrics, network controller 24 may determine the workload availability factor and the workload dependency factor based on current workload metrics.

In some examples, to determine the power mode, network controller 24 may determine a power mode based on a mapping of the measure of criticality of traffic of the node to the power mode.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable medium comprising instructions that, when executed, cause a processor to perform one or more of the methods described above. A computer-readable medium may take the form of a computer readable data storage medium and/or a computer readable transmission medium.

For example, a computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

In some examples, a computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described systems and techniques for power management. An example system includes one or more memories and one or more processors. The one or more processors are configured to obtain workload metrics from a plurality of nodes of a cluster. The one or more processors are configured to obtain network function metrics from the plurality of nodes of the cluster. The one or more processors are configured to execute at least one machine learning model to predict a corresponding measure of criticality of traffic of each node. The one or more processors are configured to determine, based on the corresponding measure of criticality of traffic of each node, a corresponding power mode for at least one processing core of each node. The one or more processors are configured to recommend or apply the corresponding power mode to the at least one processing core of each node.

Further examples are set out in the following numbered clauses.

Clause 1. A computing system comprising: one or more memories; one or more processors communicatively coupled to the one or more memories, the one or more processors being configured to: obtain workload metrics from a plurality of nodes of a cluster; obtain network function metrics from the plurality of nodes of the cluster; and for each node of the plurality of nodes: execute at least one machine learning model to predict a measure of criticality of traffic of the node; determine, based on the measure of criticality of traffic of the node, a power mode for at least one processing core of the node; and recommend or apply the power mode to the at least one processing core of the node.

Clause 2. The computing system of clause 1, wherein the workload metrics comprise at least one of a workload dependency count or a workload service availability configuration.

Clause 3. The computing system of clause 1 or 2, wherein the network function metrics comprises at least one of traffic speed, bandwidth, latency, or poll statistics.

Clause 4. The computing system of any of clauses 1-3, wherein the one or more processors are further configured to, automatically, on a periodic basis, and for each node of the plurality of nodes: execute the at least one machine learning model to predict an updated measure of criticality of traffic of the node; determine, based on the updated measure of criticality of traffic of the node, an updated power mode for the at least one processing core of the node; and recommend or apply the updated power mode to the at least one processing core of the node.

Clause 5. The computing system of any of clauses 1-4, wherein applying the power mode comprises at least one of pausing operation of the at least one processing core, changing a frequency of the at least one processing core, or moving the at least one processing core into a different processor power state.

Clause 6. The computing system of clause 5, wherein the power mode is limited to a predetermined amount of time.

Clause 7. The computing system of any of clauses 1-6, wherein the measure of criticality of traffic of the node is based on at least one of: a determined workload criticality of one or more workloads of the node, a predicted bandwidth of the node, or a predicted traffic latency of the node.

Clause 8. The computing system of clause 7, wherein the determined workload criticality is based at least in part on a workload availability factor and a workload dependency factor.

Clause 9. The computing system of clause 8, wherein the one or more processors are further configured to determine the workload criticality, and wherein the one or more processors are configured to determine the workload availability factor and the workload dependency factor by executing the at least one machine learning model.

Clause 10. The computing system of clause 8 or 9, wherein the one or more processors are further configured to determine the workload criticality, and wherein the one or more processors are configured to determine the workload availability factor and the workload dependency factor based on the workload metrics.

Clause 11. The computing system of any of clauses 1-10, wherein to determine the power mode, the one or more processors are configured to determine the power mode based on a mapping of the measure of criticality of traffic of the node to the power mode.

Clause 12. A method comprising: obtaining, by one or more processors, workload metrics from a plurality of nodes of a cluster; obtaining, by the one or more processors, network function metrics from the plurality of nodes of the cluster; and for each node of the plurality of nodes: executing, by the one or more processors, at least one machine learning model to predict a measure of criticality of traffic of the node; determining, by the one or more processors and based on the measure of criticality of traffic of the node, a power mode for at least one processing core of the node; and recommending or applying, by the one or more processors, the power mode to the at least one processing core of the node.

Clause 13. The method of clause 12, wherein the workload metrics comprise at least one of a workload dependency count or a workload service availability configuration.

Clause 14. The method of clause 12 or 13, wherein the network function metrics comprises at least one of traffic speed, bandwidth, latency, or poll statistics.

Clause 15. The method of any of clauses 12-14, further comprising automatically, on a periodic basis, and for each node of the plurality of nodes: executing, by the one or more processors, the at least one machine learning model to predict an updated measure of criticality of traffic of the node; determining, by the one or more processors and based on the updated measure of criticality of traffic of the node, an updated power mode for the at least one processing core of the node; and recommending or applying, by the one or more processors, the updated power mode to the at least one processing core of the node.

Clause 16. The method of any of clauses 12-15, wherein applying the power mode comprises at least one of pausing operation of the at least one processing core, changing a frequency of the at least one processing core, or moving the at least one processing core into a different processor power state.

Clause 17. The method of clause 16, wherein the power mode is limited to a predetermined amount of time.

Clause 18. The method of any of clauses 12-17, wherein the measure of criticality of traffic of the node is based on at least one of: a determined workload criticality of one or more workloads of the node, a predicted bandwidth of the node, or a predicted traffic latency of the node.

Clause 19. The method of clause 18, wherein the determined workload criticality is based at least in part on a workload availability factor and a workload dependency factor.

Clause 20. Computer-readable media comprising instructions, which when executed, cause one or more processors to: obtain workload metrics from a plurality of nodes of a cluster; obtain network function metrics from the plurality of nodes of the cluster; and for each node of the plurality of nodes: execute at least one machine learning model to predict a measure of criticality of traffic of the node; determine, based on the measure of criticality of traffic of the node, a power mode for at least one processing core of the node; and recommend or apply the power mode to the at least one processing core of the node.

**Claims**

1. A computing system comprising:

   one or more memories;
   one or more processors communicatively coupled to the one or more memories, the one or more processors being configured to:

      obtain workload metrics from a plurality of nodes of a cluster;
      obtain network function metrics from the plurality of nodes of the cluster; and
      for each node of the plurality of nodes:

         execute at least one machine learning model to predict a measure of criticality of traffic of the node;
         determine, based on the measure of criticality of traffic of the node, a power mode for at least one processing core of the node; and
         recommend or apply the power mode to the at least one processing core of the node.

2. The computing system of claim 1, wherein the workload metrics comprise at least one of a workload dependency count or a workload service availability configuration.

3. The computing system of any of claims 1-2, wherein the network function metrics comprises at least one of traffic speed, bandwidth, latency, or poll statistics.

4. The computing system of any of claims 1-3, wherein the one or more processors are further configured to, automatically, on a periodic basis, and for each node of the plurality of nodes:

   execute the at least one machine learning model to predict an updated measure of criticality of traffic of the node;
   determine, based on the updated measure of criticality of traffic of the node, an updated power mode for the at least one processing core of the node; and
   recommend or apply the updated power mode to the at least one processing core of the node.

5. The computing system of any of claims 1-4, wherein applying the power mode comprises at least one of pausing operation of the at least one processing core, changing a frequency of the at least one processing core, or moving the at least one processing core into a different processor power state.

6. The computing system of claim 5, wherein the power mode is limited to a predetermined amount of time.

7. The computing system of any of claims 1-6, wherein the measure of criticality of traffic of the node is based on at least one of: a determined workload criticality of one or more workloads of the node, a predicted bandwidth of the node, or a predicted traffic latency of the node.

8. The computing system of claim 7, wherein the determined workload criticality is based at least in part on a workload availability factor and a workload dependency factor.

9. The computing system of claim 8, wherein the one or more processors are further configured to determine the workload criticality, and wherein the one or more processors are configured to determine the workload availability factor and the workload dependency factor by executing the at least one machine learning model.

10. The computing system of claim 8, wherein the one or more processors are further configured to determine the workload criticality, and wherein the one or more processors are configured to determine the workload availability factor and the workload dependency factor based on the workload metrics.

11. The computing system of any of claims 1-10, wherein to determine the power mode, the one or more processors are configured to determine the power mode based on a mapping of the measure of criticality of traffic of the node to the power mode.

12. A method comprising:

obtaining, by one or more processors, workload metrics from a plurality of nodes of a cluster;
obtaining, by the one or more processors, network function metrics from the plurality of nodes of the cluster; and
for each node of the plurality of nodes:

executing, by the one or more processors, at least one machine learning model to predict a measure of criticality of traffic of the node;
determining, by the one or more processors and based on the measure of criticality of traffic of the node, a power mode for at least one processing core of the node; and
recommending or applying, by the one or more processors, the power mode to the at least one processing core of the node.

13. The method of claim 12, wherein the workload metrics comprise at least one of a workload dependency count or a workload service availability configuration.

14. The method of claim 13, wherein the network function metrics comprises at least one of traffic speed, bandwidth, latency, or poll statistics.

15. A computer-readable medium comprising instructions which, when executed by one or more programmable processors, cause one or more programmable processors to perform the method recited by any of claims 12-14.

8

CUSTOMERS
11

PUBLIC
NETWORK
4

SERVICE PROVIDER NETWORK
7

DATA CENTER
10

POWER
SOURCES
30

IP FABRIC
20

NETWORK
CONTROLLER
24      32

CHASSIS
SWITCH
18A

● ● ●

CHASSIS
SWITCH
18M

EDGE SERVICES
CONTROLLER
28      32

14

TOR
SWITCH
16A

● ● ●

TOR
SWITCH
16N

NIC
13A    25A

● ● ●

NIC
13X    25X

SERVER
12A

SERVER
12X

23

NIC
13D    25D

SERVER
12D

NIC
13B    25B

NIC
13C    25C

SERVER
12B

SERVER
12C

FIG. 1

FIG. 2

FIG. 3

300

CNR VROUTER POWER MANAGER 302

FORWARD CORE 308

FORWARD CORE 312

RING BUFFERS 310

RX QUEUE 306

TX QUEUE 314

TRAFFIC GEN POD 304

TRAFFIC GEN POD 316

**FIG. 4**

FIG. 5

EP 4 524 683 A1

**FIG. 6**

**FIG. 7**

EP 4 524 683 A1

```
                    ┌─────────┐
                    │  START  │
                    └────┬────┘
                         │
                         ▼                    ┌─808
┌─802                ┌────────────────────────────┐
┌───────────────┐   │ OBTAIN WORKLOAD REPLICA AND │
│ START CLUSTER │   │     SCHEDULE METRICS        │
│ POWER MANAGER │   └──────────────┬──────────────┘
└───────┬───────┘                  │
        │                          ▼              ┌─810
        ▼          ┌─804     ┌──────────────────────┐
┌──────────────┐        │ DETERMINE WORKLOAD   │
│OBTAIN WORKLOAD│       │ AVAILABILITY FACTORS │
│  DEPENDENCY   │        └──────────┬───────────┘
│    TABLE     │                   │
└───────┬──────┘                   ▼            ┌─812
        │              ┌──────────────────────┐
        ▼       ┌─806   │ DETERMINE WORKLOAD   │
┌──────────────┐       │    CRITICALITIES     │
│  DETERMINE   │        └──────────────────────┘
│  WORKLOAD    │
│ DEPENDENCY   │
│  FACTORS     │
└──────────────┘
```

OBTAIN WORKLOAD REPLICA AND SCHEDULE METRICS — 808

START CLUSTER POWER MANAGER — 802

OBTAIN WORKLOAD DEPENDENCY TABLE — 804

DETERMINE WORKLOAD DEPENDENCY FACTORS — 806

DETERMINE WORKLOAD AVAILABILITY FACTORS — 810

DETERMINE WORKLOAD CRITICALITIES — 812

OBTAIN TRAFFIC METRICS OF NODE NETWORK FUNCTION — 814

FORECAST TRAFFIC BANDWIDTH AND LATENCY — 816

OBTAIN AVERAGE WORKLOAD CRITICALITIES FOR EACH NODE — 818

DETERMINE TRAFFIC CRITICALITIES FOR EACH NODE NETWORK FUNCTION — 820

OBTAIN TRAFFIC CRITICALITY TO POWER MODE MAP — 822

FIND POWER MODE FOR NETWORK FUNCTION — 824

APPLY POWER MODE TO NETWORK FUNCTION — 826

**FIG. 8**

902

OBTAIN WORKLOAD METRICS FROM A PLURALITY OF NODES
OF A CLUSTER

904

OBTAIN NETWORK FUNCTION METRICS FROM THE
PLURALITY OF NODES OF THE CLUSTER

905

FOR EACH NODE OF THE PLURALTIY OF NODES

906

EXECUTE AT LEAST ONE MACHINE LEARNING MODEL TO
PREDICT A MEASURE OF CRITICALITY OF TRAFFIC OF THE
NODE

908

DETERMINE, BASED ON THE MEASURE OF CRITICALLITY OF
TRAFFIC OF THE NODE, A POWER MODE FOR AT LEAST ONE
PROCESSING CORE OF THE NODE

910

RECOMMEND OR APPLY THE POWER MODE TO THE AT LEAST
ONE PROCESSING CORE OF THE NODE

FIG. 9

Europäisches
Patentamt

European
Patent Office

Office européen
des brevets

# EUROPEAN SEARCH REPORT

Application Number

EP 24 19 8999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/117320 A1 (BRITISH TELECOMM [GB]) 9 June 2022 (2022-06-09) * page 4, line 20 - page 16, line 40; figures 1-7 * ----- | 1-15 | INV. G06F1/3203 G06F1/3206 G06F1/3209 G06F1/3228 |
| X | US 2017/373986 A1 (PARIKH ANISA [US] ET AL) 28 December 2017 (2017-12-28) * paragraph [0027] - paragraph [0099]; figures 1-6 * ----- | 1-15 | G06F1/324 G06F1/3234 G06F9/48 G06F9/50 G06N20/00 H04L12/10 H04L12/40 H04L41/00 H04L43/00 |

TECHNICAL FIELDS
SEARCHED       (IPC)

G06F

The present search report has been drawn up for all claims

| Place of search | Date of completion of the search | Examiner |
|---|---|---|
| Munich | 5 February 2025 | Alonso Nogueiro, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 8999

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2025

| Patent document cited in search report | Publication date | Patent family member(s) | | Publication date |
|---|---|---|---|---|
| WO 2022117320 A1 | 09-06-2022 | EP | 4256420 A1 | 11-10-2023 |
| | | GB | 2601509 A | 08-06-2022 |
| | | US | 2024019923 A1 | 18-01-2024 |
| | | WO | 2022117320 A1 | 09-06-2022 |
| US 2017373986 A1 | 28-12-2017 | US | 2016057075 A1 | 25-02-2016 |
| | | US | 2017373986 A1 | 28-12-2017 |
| | | US | 2019327182 A1 | 24-10-2019 |
| | | US | 2023080360 A1 | 16-03-2023 |
| | | US | 2024015112 A1 | 11-01-2024 |

EPO FORM P0459

For more details about this annex : see Official Journal of the European Patent Office, No. 12/82

**EP 4 524 683 A1**

**REFERENCES CITED IN THE DESCRIPTION**

**Patent documents cited in the description**

- US 75933324
- IN 202341060929
- US 2013044378 W
- US 22650914